# EUROPEAN PATENT APPLICATION

(11) **EP 1 983 458 A1**
(43) Date of publication of application: **22.10.2008**
(21) Application number: 07300965.6
(22) Date of filing: 19.04.2007
(51) Int. Cl.: G06F 21/00, G06F 21/02

(54) **Media package, system comprising a media package and method of using stored data**

(71) Applicant: Thomson Licensing, 92100 Boulogne-Billancourt (FR)
(72) Inventor: Diehl, Eric, Liffre 35340 (FR)
(74) Representative: Ruellan-Lemonnier, Brigitte

(57) **Abstract**

A package comprising a medium (110) storing content (112) and protected data (114) being necessary for full use of the content (112) by a player (140), and a processor (120), advantageously embedded in the medium (110), storing securing data (124) necessary to unprotect the protected data (114) and a state (122). The processor (120) comprises means (230) for receiving the protected data (114) from the player (140); means (210) for verifying the state (122); means (210) for unprotecting the received protected data (114) if the state (122) authorises this; and means (230) for passing the unprotected protected data to the player (140). The processor (120) comprises an interface (230) adapted to interact with a state change device (130) e.g. upon sale of the media package in order to set the state (122) from an original state not authorising unprotection of the protected content to a state authorising unprotection of the protected content. Also provided are a system and a method of using content on the package.

## Description

### FIELD OF THE INVENTION

The invention is generally directed to digital content protection, and more specifically to protection of digital content on pre-recorded media.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Digital content, such as film on a DVD, that hereinafter will be used as an example, is very coveted, for example by pirates who wish to copy and disseminate it, usually for financial gain. On a smaller scale, films are often stolen by persons who may think that they are too expensive to buy. It will be appreciated, however, that other kinds of digital media, such as for example computer games, often suffer from the same problems.

Naturally, copy protection of pre-recorded media is a field that has been extensively explored exploiting techniques as diverse as for example encryption (Advanced Access Content System, AACS, and Content Scrambling System, CSS), non-standard layouts, and introduction of errors for anti-ripping solutions. However, these techniques remain static and are therefore not likely to withstand piracy in the long run. Other approaches, such as for example Self Protected Digital Content (Kocher P., et al., Cryptography Research 2002) introduce a modicum of renewability.

The most promising solution seems to be the combination of an active component and the static medium, in which the active component participates to the copy protection system. One such solution is the use of so-called dongles that must be connected to the computer for a specific hardware to run properly.

At the same time, Radio Frequency Identity (RFID) tags are already employed in anti-theft systems. A tag detector portal spots attempts to pass through with an active tag, but this kind of systems may relatively easily be circumvented.

It can thus be appreciated that there is a need for a solution that improves the copy protection of the art.

The present invention provides such a solution.

### SUMMARY OF THE INVENTION

In a first aspect, the invention is directed to a media package comprising a medium storing content and protected data readable by a media reading device. The protected data is necessary for full use of the content by the media reading device. The media package further comprises a processing device storing securing data necessary to unprotect the protected data and a state. The processing device comprises means for receiving the protected data from the media reading device, means for verifying the state, means for unprotecting the received protected data if the verification of the state indicates that this is authorised, and means for passing the unprotected protected data to the media reading device. The processing device further comprises an interface (adapted to interact with a state change device in order to set the state from an original state not authorising unprotection of the protected content to a state authorising unprotection of the protected content.

In a preferred embodiment, the processing device further comprises means for authenticating the state change device.

In a further preferred embodiment, the interface is a Radio Frequency (RF) interface.

In another preferred embodiment, the medium comprises the processing device.

In yet another preferred embodiment, the processing device is adapted to return a fix value or a random value if the verification of the state indicates that unprotection of the data is unauthorised.

In yet another preferred embodiment, at least part of the content is encrypted, and the protected data is a decryption key usable for the decryption of the encrypted content. The protected data is encrypted and the processing device is adapted to use securing data to decrypt the protected data.

In a second aspect, the invention is directed to a system comprising a media package of the first aspect of the invention, a state change device, and a server adapted to authenticate the state change device. The state change device is adapted to change the state only upon successful authentication.

In a preferred embodiment, the server is further adapted to send information to update securing data of the secure chip to the state change device after successful authentication. It is advantageous that the server is adapted to verify if the secure chip has been revoked before sending the information to update the securing data.

In a third aspect, the invention is directed to a method of using content stored on a medium that also stores protected data necessary for full use of the content. A media reading device reads the protected data and passes it to a processing device embedded in the medium. The processing device verifies that its state is equal to a first value and, if this is the case, unprotects the protected data and passes the unprotected protected data to the media reading device. The media reading device uses the received unprotected protected data to use the content.

In a preferred embodiment, the protected data is encrypted and is unprotected by decryption. The content is also encrypted and the protected data is an a decryption key that enables decryption of the content, and media reading device uses the decryption key to decrypt the content.

### BRIEF DESCRIPTION OF THE DRAWINGS

Preferred features of the present invention will now be described, by way of example, with reference to the accompanying drawings, in which:
Figure 1 illustrates the general inventive concept of a copy protection system of the present invention;
Figure 2 illustrates a contact-less smart card according to a preferred embodiment of the invention;
Figure 3 illustrates a state change device according to the preferred embodiment of the invention;
Figure 4 illustrates a media reading device according to the preferred embodiment of the invention; and
Figure 5 illustrates a method for playing content on the medium according to the preferred embodiment of the invention.

### DETAILED DESCRIPTION OF PREFERRED EMBODIMENTS

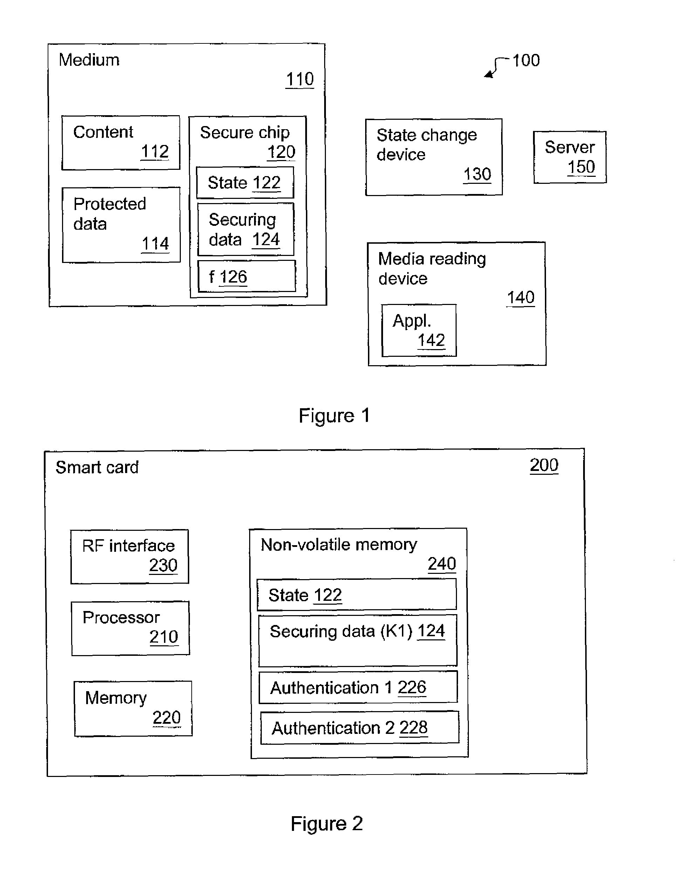

Figure 1 illustrates the general inventive concept of a copy protection system of the present invention. The system 100 comprises a medium 110 on which is stored content 112 and protected data 114, which advantageously is protected by encryption. The system 100 further comprises a secure chip 120, which is an active component able to perform cryptographic calculations and to execute programs.

The secure chip 120 may be internal to the medium 110 (such as embedded in it) or external to the medium 110. Especially in the latter case is it preferred that the secure chip 120 is linked to the medium 110 in the sense that the secure chip 120 is usable only with that particular medium 110.

The secure chip 120 stores a state 122, securing data 124 that are linked to the protected data 114, and a function f 126 with parameters protected data 114 and securing data 124, as will be further described hereinafter. The securing data 124 may be at least probably unique for the medium, for a batch of media or for all media having identical content.

The system 100 also comprises at least one state change device 130, advantageously located in points of sale. The state change device 130 is adapted to communicate with the secure chip 120 in order to deactivate the anti-theft function by altering the state 122.

In addition, the system 100 comprises at least one media reading device 140 for interacting with the media, for example by playing the content stored on the medium 110. The media reading device 140 is adapted to read content 112 and protected data 114 stored on the medium 110, to communicate with the secure chip 120, and to execute an application 142 that may for example have been read from the content 112 of the medium 110, downloaded from the Internet, or be embedded in the media reading device 140.

Furthermore, the system may comprise a, possibly remote, server 150 adapted to communicate with and authenticate state change devices 130 located in points of sale as will be further described hereinafter.

When leaving the manufacturer's site, the state 122 of the secure chip 120 is preferably set to a state called ANTI_THEFT, which means that the medium is not fully usable or accessible by a media reading device. When a customer purchases the medium 110 (or at another suitable time), the state 122 of the secure chip is changed to ACTIVE, using a state change device 130 and any suitable prior art method. However, in addition to the known methods, the secure chip 120 authenticates the state change device 130 and changes its state 122 only upon successful authentication.

When the customer uses the content 112, access to at least parts of the protected data 114 is needed, which means that the media reading device 140 requires the medium 110 to be inserted or otherwise made accessible for reading. However, the application 142 is not able to use the protected data 114 directly, but sends the necessary parts of the protected data 114 to the secure chip 120. If the state 122 of the secure chip 120 is equal to ACTIVE, then the secure chip 120 executes the function f 126, with the received data and the securing data 126 as input parameters, and returns the result of this calculation to the application 142. If the state 122 is not equal to ACTIVE (such as for example if it is ANTI-THEFT), then the secure chip 120 preferably returns no information, but it is also possible for it to return a random value. As the application 142 needs the correct information to use correctly the content 112, the application 142 goes in a deteriorated mode or fails if the returned data are incorrect of if no data is returned. It is advantageous that the application 142 knows when the data it needs is protected data 114, for example by instructions in its code that the first data needed (or data at a particular point during execution) is protected data 114, but it is also possible for the application 142 to try using protected data 142 and request unprotection when it discovers that such data is unintelligible or doesn't fit an expected format.

In an alternate embodiment, the interaction between the secure chip 120 and the state change device 130 is more complex. The state change device 130 is connected to a remote server 150. Once the secure chip 120 has authenticated the state change device 130, the latter requests from the server 150 (or, if the server is a database, searches for) information specific to the secure chip 120.

The information is transmitted securely to the secure chip 120 that uses it to complete its securing data 124. While this alternate embodiment is more complex, it has the advantage that the impact of the theft of a state change device 130 is limited, as it is possible to revoke the state change device 130 so that the server (or database) 150 refuses to return any information to it. It should further be noted that each medium (or batch of media) may have a specific serial number or identifier and that the data returned from the remote server 150 is specific for the medium (or batch of media).

It is advantageous that the server 150, before returning any information specific to the secure chip 120, checks if the secure chip 120 is listed on a special list (a revocation list), e.g. if it has been reported as stolen or if it for any other reason should not be usable. In this case, the server 150 refuses to provide the necessary information to the state change device 130. An advantage of this is that it e.g. is possible to make sure that a stolen batch may not be sold easily.

### Details about the preferred embodiment

In a preferred embodiment, the invention is directed to a system for protecting video discs. In the preferred embodiment, the medium 110 is a Digital Versatile Disc (DVD) and the secure chip 120 is a contact-less smart card embossed in the DVD.

Figure 2 illustrates the contact-less smart card 200 of the preferred embodiment of the invention. The contact-less smart card 200 comprises:
- A processing unit 210.
- A Radio Frequency (RF) interface 230 for communication with the media reading device 140 and the state change device 130.
- A memory 220, such as a volatile Random Access Memory (RAM).
- A non-volatile memory 240 adapted to store at least the following data:
   o the state 122;
   o securing data 124, preferably in the form of a 128-bit AES key K₁.
   o first authentication data 226 comprising a preferably unique Diffie-Hellman (DH) 1024-bit certified key pair (K_{pub1}, Kₚᵣᵢ₁) and a certificate for public key K_{sign1} where:
      ■ Kₚᵣᵢ₁ is a DH-1024 private key. It is preferably unique for each smart card 200.
      ■ K_{pub1} is the corresponding signed public key. The certificate of K_{pub1} is been signed by the private key corresponding to K_{sign1}.
      ■ K_{sign1} is common to all smart cards 200 and state change devices 130.
   o second authentication data 228 comprising a preferably unique DH 1024-bit certified key pair (K_{pub2}, Kₚᵣᵢ₂) and a certificate for public key K_{sign2} where:
      ■ Kₚᵣᵢ₂ is a DH-1024 private key. It is preferably unique for each smart card 200.
      ■ K_{pub2} is the corresponding signed public key. The certificate of K_{pub2} is been signed by the private key corresponding to K_{sign2}.
      ■ K_{sign2} is common to all smart cards 200 and media reading devices 140.
      • A first computer programme adapted to execute the algorithms described hereafter

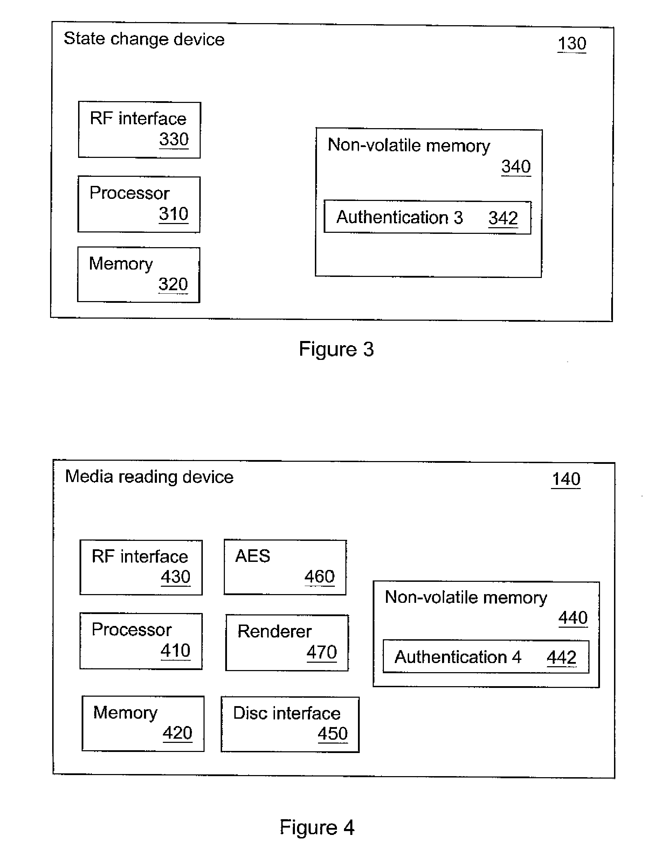

Figure 3 illustrates a state change device according to the preferred embodiment of the invention. The state change device 130 comprises:
- A processing unit 310
- A RF interface 330 adapted to communicate with the smart card 200.
- A memory 320.
- A non-volatile memory 340 adapted to store:
   o Third authentication data 342, which is a preferably unique DH 1024-bit certified key pair (K_{pub3}, Kₚᵣᵢ₃) and a certificate for public key K_{sign1} where:
      ■ Kₚᵣᵢ₃ is a DH-1024 private key, preferably unique for each state change device 130.
      ■ K_{pub3} is the corresponding signed public key. The certificate of K_{pub3} is signed by the private key corresponding to K_{sign1}.
      ■ K_{sign1} is common to all smart cards 200 and state change devices 130.
   • A second computer programme adapted to execute the algorithms described hereafter

Figure 4 illustrates a media reading device according to the preferred embodiment of the invention. The media reading device 140 comprises:
- A processing unit 410
- A RF interface 430 adapted to communicate with the smart card 200.
- A memory 420
- A non-volatile memory 440 adapted to store:
   o Fourth authentication data 442, which is a preferably unique DH 1024-bit certified key pair (K_{pub4}, Kₚᵣᵢ₄) and a certificate for public key K_{sign2} where:
      ■ Kₚᵣᵢ₄ is a DH-1024 private key, preferably unique for each media reading device 140.
      ■ K_{pub4} is the corresponding signed public key. The certificate of K_{pub4} is signed by the private key corresponding to K_{sign2}.
      ■ K_{sign2} is common to all smart cards 200 and media reading devices 140.
   o A third computer programme adapted to execute the algorithms described hereafter
- A DVD interface to read content 112 and protected data 114 from the medium 110.
- An Advanced Encryption Standard (AES) descrambler 460.
- A video renderer 470.

When leaving the factory, state 122 of each smart card 200 is set to value ANTI_THEFT. Upon purchase of a medium, a state change device 130 is used to change the state 122 as follows. The processing unit 310 of the state change device 130 and the processing unit 210 of the smart card 200 communicate through their respective RF interfaces 330, 230 and attempt to perform an authenticated Diffie-Hellman protocol using the first authentication data 226 and the third authentication data 342. The processor 210 of the smart card 200 verifies that the certificate of the third authentication data 342 belongs to a state change device 130. If the authentication succeeds, then the state change device 130 sends to the smart card 200 a command to change state. Upon reception of the command, the smart card 200 changes its state 122 to ACTIVE. If the authentication fails, the smart card 200 refuses to execute any command issued by change state device 130.

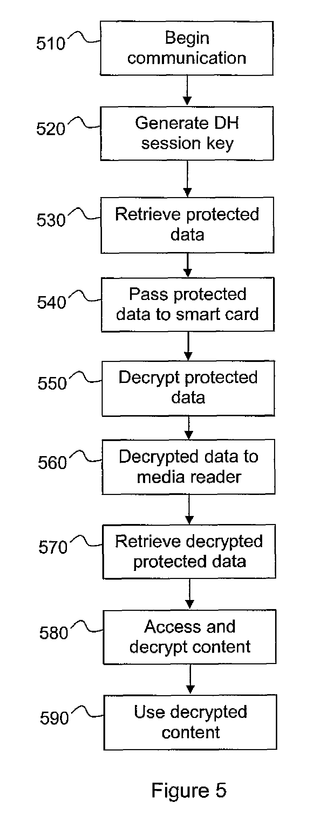

Figure 5 illustrates a method for playing content on the medium according to the preferred embodiment of the invention. The medium 110 comprises content 112 encrypted by AES using a title key Kₜᵢₜₗₑ.

In order to play the medium 110, the media reading device 140 begins communication 510 with the smart card 200 through the RF interfaces 430, 230, and they attempt to authenticate each other and perform a Diffie-Hellman key exchange 520 using the second authentication data 228 and the fourth authentication data 442. If the authentication succeeds (provided for example that the state 122 equals ACTIVE), then the media reading device 140 retrieves 530 from the medium 110 the protected data 114, which is a title key Kₜᵢₜₗₑ encrypted using AES and key K₁, i.e. a key corresponding to the securing data 124. This encrypted title key is then passed 540 to the smart card 200 that decrypts 550 it using the securing data 124 (key K₁) and, using the session key established during the Diffie-Hellman key exchange, securely passes 560 it back to the media reading device 140 that thus retrieves 570 the decrypted protected data in the form of the title key Kₜᵢₜₗₑ. The media reading device 140 then uses its embedded AES descrambler to decrypt 580 the content 112 using the title key Kₜᵢₜₗₑ, and uses 590 the decrypted content to display clear video.

As will be appreciated, the present invention enables protection of content on a pre-recorded medium.

A person skilled in the art will appreciate that the present invention may also be used to protect other kinds of digital data, such as for example music (on CDs and so on) and computer programmes. In case of computer programmes, it is for example possible for the protected data 114 to be encrypted data, such as for example at least one pointer, that is required to be decrypted for the rest of the programme stored as content 112.

It will be understood that the present invention has been described purely by way of example. Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A media package comprising a medium (110) storing content (112) and protected data (114) readable by a media reading device (140), the protected data (114) being necessary for full use of the content (112) by the media reading device (140), and a processing device (120) storing securing data (124) necessary to unprotect the protected data (114) and a state (122), the processing device (120) comprising:
- means (230) for receiving the protected data (114) from the media reading device (140);
- means (210) for verifying the state (122);
- means (210) for unprotecting the received protected data (114) if the verification of the state (122) indicates that this is authorised; and
- means (230) for passing the unprotected protected data to the media reading device (140);
the media package being **characterised in that** the processing device (120) further comprises an interface (230) adapted to interact with a state change device (130) in order to set the state (122) from an original state not authorising unprotection of the protected content to a state authorising unprotection of the protected content.

2. The media package of claim 1, wherein the processing device further comprises means (210, 226) for authenticating the state change device (130).

3. The media package of claim 1, wherein the interface (230) is a Radio Frequency (RF) interface.

4. The media package of claim 1, wherein the medium (110) comprises the processing device (120).

5. The media package of claim 1, wherein the processing device (120) is adapted to return a fix value or a random value if the verification of the state (122) indicates that unprotection of the data is unauthorised.

6. The media package of claim 1, wherein at least part of the content (112) is encrypted, and the protected data (114) is a decryption key usable for the decryption of the encrypted content, the protected data (114) further being encrypted and the processing device (120) is adapted to use securing data (124) to decrypt the protected data (114).

7. A system (100) comprising a media package of any of claims 1 to 6, a state change device (130), and a server (150) adapted to authenticate the state change device (130), and wherein the state change device (130) is adapted to change the state (122) only upon successful authentication.

8. The system of claim 7, wherein the server (150) is further adapted to send information to update securing data (124) of the secure chip (120) to the state change device (130) after successful authentication.

9. The system of claim 8, wherein the server (150) is further adapted to verify if the secure chip (120) has been revoked before sending the information to update the securing data (124)

10. A method of using content (112) stored on a medium (110) that also stores protected data (114) necessary for full use of the content (112), the method comprising the steps of:
- reading (530) by a media reading device (140) the protected data (114);
- passing (540) by the media reading device (140) the protected data (114) to a processing device (120; 200) embedded in the medium (110);
- verifying by the processing device (120; 200) that its state (122) is equal to a first value (ACTIVE);
- in case of positive verification, unprotecting (550) by the processing device (120; 200) the protected data (114) and passing (560) by the processing device (120; 200) the unprotected protected data to the media reading device (140); and
- using (580, 590) by the media reading device (140) the received unprotected protected data to use the content (112).

11. The method of claim 10, wherein:
the protected data (114) is encrypted and the step of unprotecting comprises decrypting the protected data (114); and
the content (112) is encrypted and the protected data (114) is an a decryption key enabling decryption of the content (112), and the step of using the received unprotected protected data to use the content (112) comprises decrypting the content (112) using the decryption key.
